# EUROPEAN PATENT APPLICATION

(11) **EP 1 764 854 A1**
(43) Date of publication of application: **21.03.2007**
(21) Application number: 06018973.5
(22) Date of filing: 11.09.2006
(51) Int. Cl.: H01M 8/04, H01M 8/06

(54) **Purge system for fuel cell**

(30) Priority: 16.09.2005 KR 20050087105
(71) Applicant: LG Electronics Inc., Yongdungpo-gu Seoul (KR); LG Chem, Ltd., Yongdungpo-Gu Seoul (KR)
(72) Inventor: Ryoo, Sung-Nam, Daejeon (KR); Kim, Tae-Won, Anyang Gyeonggi-Do (KR)
(74) Representative: TER MEER - STEINMEISTER & PARTNER GbR

(57) **Abstract**

A purge system for a fuel cell generates an inactive gas by complete combustion of a fuel supplied to a stack unit, and allows the stack unit to be purged using the inactive gas at the time of starting or stopping the system, so that the purging of the system can be carried out without purge equipment such as a nitrogen tank, and accordingly the safety for installation and maintenance of the system can be improved, and the convenience of use can be improved because there is no need to replace a purge gas tank.

## Description

### BACKGROUND OF THE INVENTION

### 1. Field of the Invention

The present invention relates to a purge system for a fuel cell, and more particularly to, a purge system for a fuel cell which can produce nitrogen gas N₂ without purge equipment to thus purge the system.

### 2. Description of the Related Art

In general, a fuel cell is a device for directly transforming energy of a fuel into electric energy. Such a fuel cell is a fuel cell system in which an anode and a cathode are installed on both sides of a polymer electrolyte film, and which generates electrical energy by the movement of electrons created when electrochemical oxidation of oxygen serving as a fuel occurs at the cathode (oxidized electrode or fuel electrode) and electrochemical reduction of oxygen serving as an oxidizer occurs at the cathode (reduced electrode or air electrode), which may be referred to as a kind of power generation plant.

The aforementioned fuel cell is classified into an alkaline fuel cell (AFC), a phosphoric acid fuel cell (PAFC), a molten carbonate fuel cell (MCFC), a solid electrolyte fuel cell (SOFC), a polymer electrolyte fuel cell (PEMFC), and so forth, depending on operating temperature and the type of main fuels. Among them, the electrolyte of the polymer electrolyte fuel cell is not liquid but a solid polymer membrane, which is distinguished from other fuel cell types. In the polymer electrolyte fuel cell, fuels can be used typically in such a manner that a hydrocarbon (CH) fuel, such as LNG, LPG, etc, is refined into hydrogen (H₂) through desulfurization, reforming reaction, and hydrogen refining process at a reforming unit, and the refined hydrogen is supplied to the fuel electrode of a stack unit.

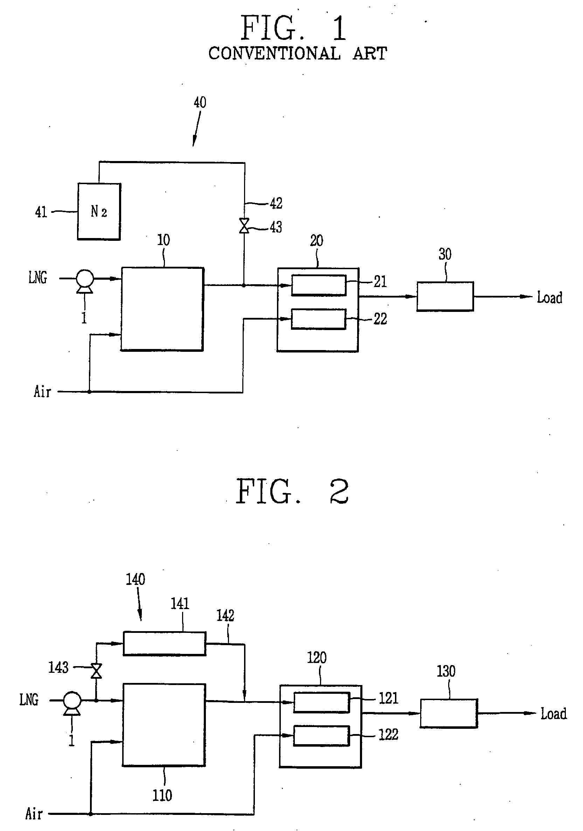

FIG. 1 is a systematic view of a PEMFC (Proton Exchange fuel cell) type fuel cell in which a hydrocarbon (CH) fuel, such as LNG, LPG, CH₃OH, etc ("LPG" in the drawing), is refined into hydrogen (H₂) through desulfurization, reforming reaction, and hydrogen refining process at a reformer and used as a fuel.

As shown therein, the prior art fuel cell includes a reforming unit 10 refining hydrogen from LNG, a stack unit 20 provided with a fuel electrode 21 connected to the reforming unit 10 to receive refined hydrogen and an air electrode 22 to receive oxygen from the air, for producing electricity and heat by an electrochemical reaction between hydrogen and oxygen, an electricity conversion unit 30 connected to the output side of the stack unit 20, for converting electricity and supplying the same to a load, a purge unit 40 for purging the stack unit 20 with nitrogen when the system is stopped, with a nitrogen supply tube 42 to be described later being connected to the inlet sides of the fuel electrode 21 and air electrode 22 of the stack unit 20, and a control unit (not shown) electrically connected to the above-described units 10, 20, 30 and 40, for controlling the same.

The purge unit 40 includes a nitrogen tank 41 for storing a predetermined amount of nitrogen, which is an inactive gas, in a high pressure state, a nitrogen supply tube 42 connecting the nitrogen tank 41 to a middle portion of the fuel supply tube between the inlet side of the reforming unit 10 and the inlet side of the fuel electrode 21 of the stack unit 20, and a nitrogen supply valve 43 installed at a middle portion of the nitrogen supply tube 42 and opened and closed by the control unit.

The above-described prior art fuel cell operates as follows.

That is, a hydrocarbon fuel is reformed at the reforming unit 10 and refined into hydrogen, and the hydrogen is supplied to the fuel electrode 41 of the stack unit 40 while air is supplied to the air electrode 42 of the stack unit 40, thereby causing an oxidation reaction at the electrode 41 and a reduction reaction at the air electrode 42. Electrons created in this process generate electricity while moving from the fuel electrode 41 to the air electrode 42, and this electricity is transformed to AC electricity and thus supplied to various kinds of electric appliances.

Here, if the stack unit 20 is in operation, the nitrogen supply valve 43 is closed by the control unit, and accordingly the fuel (LNG) is refined into nitrogen in the reforming unit 10 and supplied to the fuel electrode 21 of the stack unit 20, and at the same time air is supplied to the air electrode 22, so that an oxidation reaction and a reduction reaction normally occur, thereby producing an electrical energy and a heat energy.

On the other hand, if the stack unit 20 is started or stopped, the nitrogen supply valve 43 is opened by the control unit, and accordingly the high pressure nitrogen gas (N₂) filled in the nitrogen tank 41 is supplied to pipelines of the system through the nitrogen supply tube 42, so that the fuel and air remaining in each pipeline is exhausted, thereby preventing the oxidation of the catalyst, and maintaining the durability and stability of the system.

However, in such a prior art fuel cell, if the fuel cell is installed indoors such as in apartments, it is necessary to have a high pressure nitrogen tank 41, as well as a fuel cell system, and fill nitrogen therein, thereby causing problems in safety and inconvenience in use.

### BRIEF DESCRIPTION OF THE INVENTION

Therefore, the present invention has been made in consideration of the above problems of the prior art fuel cell, and has as its object to provide a purge system for a fuel cell, which can purge the system by itself using an inactive gas generated by complete combustion of a fuel without a nitrogen supply device.

To achieve these and other advantages and in accordance with the purpose of the present invention, as embodied and broadly described herein, there is provided a purge system for a fuel cell, including: a fuel supply unit; a reforming unit connected to the fuel supply unit, for reforming a hydrocarbon fuel and refining the same into hydrogen; a stack unit provided with a fuel electrode to receive a refined hydrogen from the reforming unit and an air electrode to receive oxygen from the air, for creating an electrical energy and a thermal energy by an electrochemical reaction between hydrogen and oxygen; a purge unit selectively communicated with the stack unit, for purging the stack unit; and a control unit electrically connected to the purge unit, for controlling the operation of the purge unit.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a systematic view of one example of a prior art fuel cell;
FIG. 2 is a systematic view of one example of a fuel cell with a purge unit according to the present invention; and
FIG. 3 is a schematic view showing a fuel transfer procedure when the fuel cell is in operation according to the present invention; and
FIG. 4 is a schematic view showing a fuel transfer procedure when the fuel cell is started/stopped according to the present invention.

### DETAILED DESCRIPTION OF THE INVENTION

Hereinafter, a purge unit for a fuel cell capable according to the present invention will be described with reference to one embodiment which is illustrated in the accompanying drawings.

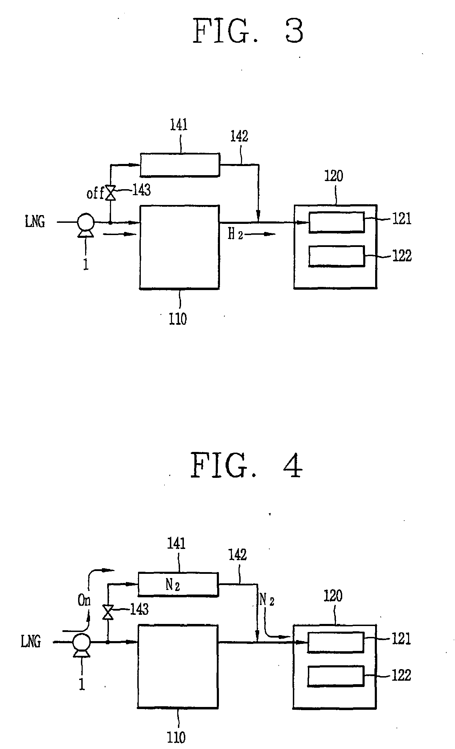

FIG. 2 is a systematic view of one example of a fuel cell with a purge unit according to the present invention. FIG. 3 is a schematic view showing a fuel transfer procedure when the fuel cell is in operation according to the present invention. FIG. 4 is a schematic view showing a fuel transfer procedure when the fuel cell is started/stopped according to the present invention.

As shown therein, the fuel cell according to the present invention includes a reforming unit 110 refining hydrogen from LNG supplied through a fuel supply pump 1 of a fuel supply unit, a stack unit 120 provided with a fuel electrode 121 connected to the reforming unit 110 to receive refined hydrogen and an air electrode 122 to receive oxygen from the air, for producing electricity and heat by an electrochemical reaction between hydrogen and oxygen, an electricity conversion unit 130 connected to the output side of the stack unit 120, for supplying electricity to a load, a purge unit 140 operated according to whether or not the stack unit 120 is in operation, for purging the fuel electrode of the stack unit, and a control unit (not shown) electrically connected to the above-described units 110, 120, 130, and 140.

The purge unit 140 includes a catalyst combustor 141 for producing an inactive gas by complete combustion of a fuel, a fuel distribution pipe142 having the catalyst combustor installed at a middle portion thereof, and a purge gas valve 143 installed at the fuel distribution pipe 142, and selectively opened and closed by the control unit.

In the catalyst combustor 141, a platinum (Pt) group element is mainly used as the catalyst. As the catalyst, palladium (Pd) cheaper and lighter than platinum is mainly used.

The fuel distribution pipe 142 is divided at a middle portion of the fuel supply tube connected between the fuel supply pump 1 and the inlet side of the reforming unit 110, and joins between the outlet side of the reforming unit 110 and the inlet side of the stack unit 120.

The purge gas valve 143 is comprised of an on/off valve, and connected to the control unit (not shown) along with the stack unit 120 so as to be operated according to whether or not the stack unit 120 is in operation.

In the drawings, like reference numerals have been used throughout to designate identical elements.

The operational effects of the purge unit for a fuel cell according to the present invention are as follows.

That is, a hydrocarbon fuel is reformed at the reforming unit 110 and refined into hydrogen, and the hydrogen is supplied to the fuel electrode 121 of the stack unit 120 to thus cause an oxidation reaction, and at the same time oxygen in the air is supplied to the air electrode 122 of the stack unit 120 to thus cause a reduction reaction. Electrons created in this process generate electricity while moving from the fuel electrode 121 to the air electrode 122, and this electricity is supplied to various kinds of electric appliances through the electricity conversion unit 130.

When the fuel cell is started or stopped, it is necessary to purge the system in order to prevent the oxidation of the catalyst of the stack unit 120, so that the durability and stability of the system can be maintained. For this, in the present invention, nitrogen, which is an inactive gas, can be generated by the use of a fuel itself, and the nitrogen is supplied to the stack unit 120 so as to purge the pipelines.

For instance, as shown in FIG. 3, during the normal operation of the system, the purge gas valve 143 is turned off by the control unit to thus prevent the fuel from being introduced into the catalyst combustor 141, thereby preventing a nitrogen gas from being generated from the catalyst combustor 141.

On the other hand, as shown in FIG. 4, when the system is started or stopped, the purge gas valve 143 is turned on by the control unit to thus allow the fuel to be introduced into the catalyst combustor 141 made of platinum through the fuel supply tube, a hydrocarbon fuel is completely combusted in the catalyst combustor 141 to thus produce a nitrogen gas (N₂), and the nitrogen gas is supplied to the system before a fuel is normally supplied to the system at the time of starting, or after a fuel supply to the system is disconnected at the time of stopping, thereby preventing the oxidation of the catalyst in the system, and therefore maintaining the durability and stability of the system.

In this manner, the system is purged at the time of starting or stopping by using a purge gas generated from the fuel supplied to the system, so that the purging of the system can be carried out without purge equipment such as a nitrogen tank, and accordingly the safety for the installation and maintenance of the system can be improved, and the convenience of use can be improved because there is no need to replace a purge gas tank.

## Claims

1. A purge system for a fuel cell, comprising:
a fuel supply unit;
a reforming unit connected to the fuel supply unit, for reforming a hydrocarbon fuel and refining the same into hydrogen;
a stack unit provided with a fuel electrode to receive a refined hydrogen from the reforming unit and an air electrode to receive oxygen from the air, for creating an electrical energy and a thermal energy by an electrochemical reaction between hydrogen and oxygen;
a purge unit selectively communicated with the stack unit, for purging the stack unit; and
a control unit electrically connected to the purge unit, for controlling the operation of the purge unit.

2. The purge system of claim 1, wherein the purge unit is installed so as to be selectively communicated with the fuel supply unit and the stack unit.

3. The purge system of claim 1, wherein the purge unit includes: a fuel distribution pipe divided from the inlet side of the reforming unit and connected to the inlet side of the fuel electrode of the stack unit; a combustor installed at a middle portion of the fuel distribution pipe, for producing producing an inactive gas by complete combustion of a fuel; and a purge gas valve installed at the fuel distribution pipe at the inlet side of the combustor, for adjusting a fuel supply to the combustor.

4. The purge system of claim 3, wherein the combustor is comprised of a catalyst combustor using a platinum group element.

5. The purge system of claim 4, wherein palladium (Pd) is used as the element of the combustor.

6. The purge system of claim 1, wherein the control unit is electrically connected to the stack unit along with the purge unit, so that the purge unit is operated according to whether or not the stack unit is in operation.
